# EUROPÄISCHE PATENTSCHRIFT

(11) **EP 3 115 625 B1**
(45) Veröffentlichungstag und Bekanntmachung des Hinweises auf die Patenterteilung: **18.04.2018**
(21) Anmeldenummer: 16178335.2
(22) Anmeldetag: 07.07.2016
(51) Int. Cl.: F16B 7/06, B64C 13/30, F16B 21/12, F16C 7/06

(54) **ZUG-DRUCK-STANGE MIT VERBINDUNGSBOLZEN**
PUSH/PULL ROD WITH CONNECTION BOLT
PINCE DE TRACTION-COMPRESSION COMPRENANT UN BOULON DE LIAISON

(30) Priorität: 10.07.2015 DE 202015103634 U
(43) Veröffentlichungstag der Anmeldung: 11.01.2017
(73) Patentinhaber: Fellinger, Josef, 4872 Neukirchen an der Vöckla (AT); Haller, Matthias, 4872 Neukirchen a. d. Vöckla (AT)
(72) Erfinder: Fellinger, Josef, 4872 Neukirchen an der Vöckla (AT); Haller, Matthias, 4872 Neukirchen a. d. Vöckla (AT)
(74) Vertreter: Lösch, Christoph Ludwig Klaus

(56) Entgegenhaltungen:
- EP-A2- 2 703 661
- DE-U1- 8 102 347
- DE-U1-202010 013 203
- GB-A- 191 416 616

## Beschreibung

Die Erfindung betrifft eine Zug-Druck-Stange mit Verbindungsbolzen. Zug-Druck-Stangen (siehe z.B. EP 2 703 661 A2), die beispielsweise im Flugzeugbau eingesetzt werden, weisen im Allgemeinen einen im Wesentlichen rohrförmigen Körper auf, an dessen Enden sich jeweils eine als Gabelkopf ausgebildete Befestigungsvorrichtung zur Montage der Zug-Druck-Stange mit Hilfe eines Verbindungsbolzens befindet. Die Länge der Zug-Druck-Stange ist hierbei beispielsweise über eine oder mehrere Gewindeanordnungen verstellbar, um eine Anpassung an einen vorgegebenen Abstand zwischen den Montagepunkten vornehmen zu können.
Der Erfindung liegt die Aufgabe zugrunde, eine montagefreundliche Zug-Druck-Stange anzubieten, die auch bei beengten Platzverhältnissen gut zu montieren ist.

Diese Aufgabe wird durch die Merkmale des Schutzanspruchs 1 gelöst. Vorteilhafte Ausführungsformen sind in den Unteransprüchen beschrieben. Erfindungsgemäß weist die Zug-Druck-Stange zumindest eine Befestigungsvorrichtung mit einem Gabelkopf und einem daran angeordneten Schaft, wobei die Befestigungsvorrichtung zur Längenveränderung der Zug-Druck-Stange über eine Gewindeanordnung drehbar mit einem rohrförmigen Mittelteil verbunden ist, sowie einen Verbindungsbolzen, der beidseitig in eine Verbindungsbohrung des Gabelkopfes einsetzbar ist, auf. Der Verbindungsbolzen weist ein Clipelement auf, welches in eine am Gabelkopf ausgebildete Halterung einrastbar ist.

Rastet der Verbindungsbolzen durch das Clipelement an der Halterung am Gabelkopf ein, so ist der Verbindungsbolzen lagegesichert und ein unabsichtliches Lösen des Verbindungsbolzens kann verhindert werden. Durch die Möglichkeit, den Verbindungsbolzen beidseitig (d.h. wahlweise von einer der beiden Seiten) einzusetzen wird die Montagefreundlichkeit erhöht, denn je nach Zugänglichkeit kann der Verbindungsbolzen von der jeweils bevorzugten (besser zugänglichen) Seite in den Gabelkopf eingeführt werden.

In einer bevorzugten Ausführungsform ist an beiden äußeren Seitenflächen des Gabelkopfes jeweils eine Halterung ausgebildet. Somit kann der Verbindungsbolzen unabhängig von der Einführrichtung zuverlässig gehalten werden.

In einer vorteilhaften Ausführungsform ist die Halterung als Haltebolzen an der äußeren Seitenfläche des Gabelkopfes ausgebildet. In besonders vorteilhafter Weise weist der Haltebolzen hierbei eine radial umlaufende Einkerbung auf. In diese Einkerbung kann das Clipelement einrasten. Auf diese Weise ist eine besonders lagestabile Sicherung möglich.

In vorteilhafter Weise weist der Verbindungsbolzen einen Hebelarm, an dem das Clipelement ausgebildet ist, und eine Betätigungsleiste auf. Dadurch wird die Bedienung (d.h. das Einrasten und Entriegeln des Clipelements) erleichtert.

In einer vorteilhaften Ausführungsform ist das Clipelement als Teilkreisring, insbesondere als Dreiviertel- oder Zweidrittelring, ausgebildet und aus einem Polymerwerkstoff, insbesondere aus einem thermoplastischen Polymerwerkstoff, gefertigt. Auf diese Weise besitzt das Clipelement elastische Eigenschaften, die den Einrastvorgang in die Halterung begünstigen.

Die Erfindung ist anhand eines Ausführungsbeispiels in den Zeichnungsfiguren weiter erläutert, wobei gleiche Bezugszeichen gleiche bzw. gleichwirkende Komponenten bezeichnen. Es zeigen:
- Fig. 1: eine perspektivische Explosionsdarstellung einer Zug-Druck-Stange mit einem Verbindungsbolzen;
- Fig. 2: eine perspektivische Ansicht der Zug-Druck-Stange aus Fig. 1;
- Fig. 3: eine perspektivische Ansicht der Zug-Druck-Stange aus Fig. 1 im eingerasteten Zustand; und
- Fig. 4: eine Schnittdarstellung der Zug-Druck-Stange aus Fig. 3.

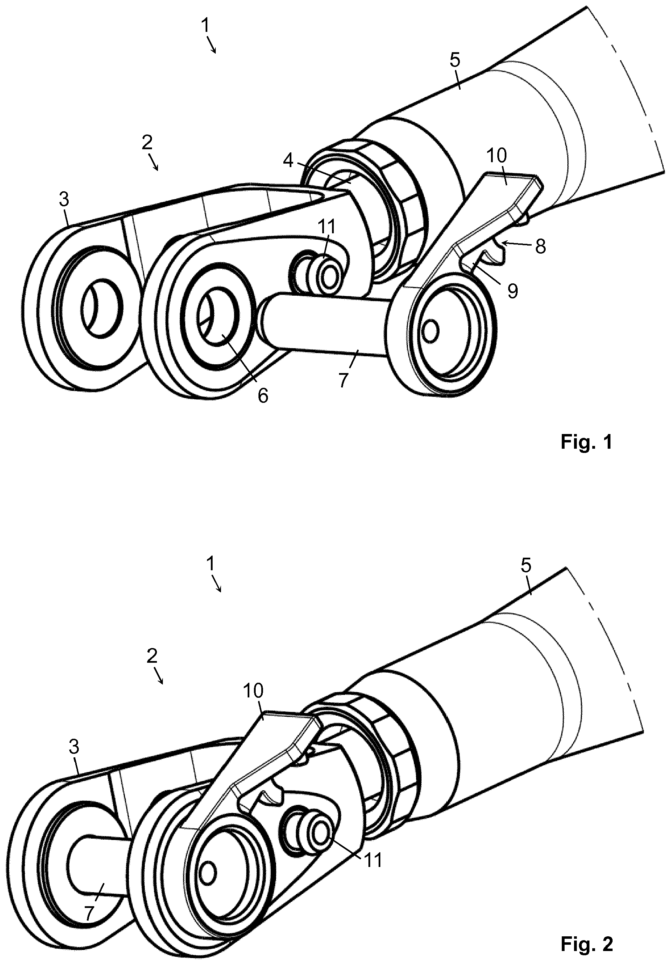

In den Fig. 1 bis 4 ist eine Ausführungsform einer Zug-Druck-Stange 1 gezeigt. Die Zug-Druck-Stange 1 weist eine Befestigungsvorrichtung 2 auf. Die Befestigungsvorrichtung 2 weist einen Gabelkopf 3 und einen Schaft 4 auf. Der Schaft 4 erstreckt sich in ein rohrförmiges Mittelteil 5 der Zug-Druck-Stange 1. Das Mittelteil 5 ist in den Figuren 1 bis 3 jeweils nur ausschnittsweise dargestellt. Am nicht sichtbaren Ende des Mittelteils 5 ist typischerweise eine weitere Befestigungsvorrichtung angeordnet, die in analoger Weise zu der hier beschriebenen Befestigungsvorrichtung 2 ausgebildet sein kann.

Der Gabelkopf 3 dient zur Fixierung der Zug-Druck-Stange 1 an einem Montagepunkt der die Zug-Druck-Stange 1 umgebenden Konstruktion. Der Gabelkopf 3 weist eine Verbindungsbohrung 6 auf, in die ein Verbindungsbolzen 7 eingebracht werden kann. Durch das Einbringen des Verbindungsbolzens 7 erfolgt eine Fixierung des Gabelkopfes 3 an dem Montagepunkte der die Zug-Druck-Stange 1 umgebenden Konstruktion.

Zum Ausgleich einer Lagedifferenz kann die Länge der Zug-Druck-Stange 1, variierte werden. Dazu ist der Schaft 4 mit einem außenliegenden Gewinde und das Mittelteil 5 mit einem korrespondierenden Innengewinde versehen, sodass durch Herein- bzw. Herausschrauben der Befestigungsvorrichtung 2 die Länge der Zug-Druck-Stange 1 variiert werden kann. Das Außengewinde des Schaftes 4 und das korrespondieren Innengewinde des Mittelteils 5 bilden damit eine Gewindeanordnung.

Der Verbindungsbolzen 7 kann beidseitig in die Verbindungsbohrung 6 des Gabelkopfes 3 eingeführt werden. Der Verbindungsbolzen 7 weist an einem seiner axialen Enden einen Hebelarm 9 und eine Betätigungsleiste 10 auf. Am Hebelarm 9 ist ein Clipelement 8 ausgebildet. Das Clipelement 8 ist als Teilkreisring ausgebildet.

Am Gabelkopf 3 ist an beiden sich gegenüberliegenden Seitenflächen jeweils ein Haltebolzen 11 ausgebildet. Die Haltebolzen 11 stellen Halterungen im Sinn der vorliegenden Erfindung dar. Die Haltebolzen 11 besitzen jeweils eine umlaufende Einkerbung 12.

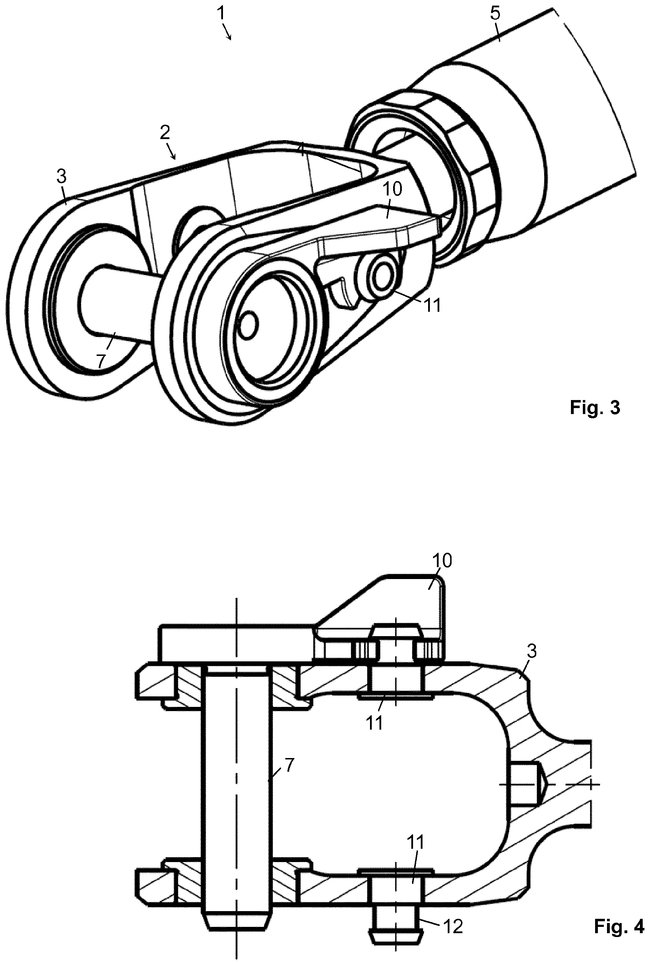

Zur Fixierung der Zug-Druck-Stange 1 an einem Montagepunkt wird der Verbindungsbolzen 7 zunächst in die Verbindungsbohrung 6 eingeführt. Dieser Zustand ist in Fig. 2 gezeigt. Anschließend kann das Clipelement 8 in den Haltebolzen 11, genauer in die Einkerbung 12, eingerastet werden (dieser Zustand ist in Fig. 3 und Fig. 4 dargestellt). Auf diese Weise ist der Verbindungsbolzen 7 lagegesichert und ein unbeabsichtigtes Lösen des Verbindungsbolzens 7 wird verhindert. Zum Lösen der Zug-Druck-Stange 1 vom Montagepunkt wird das Clipelement 8 zunächst entriegelt. Anschließend kann der Verbindungsbolzen 7 aus der Verbindungsbohrung 6 herausgezogen werden.

Der Verbindungsbolzen 7 ist derart gestaltet, dass er von beiden Seiten des Gabelkopfes 3 in die Verbindungsbohrung 6 eingeführt werden kann. Da auf jeder Seite des Gabelkopfes 3 ein Haltebolzen 11 ausgebildet ist, ist unabhängig von der Einführrichtung des Verbindungsbolzens eine lagestabile Sicherung des Verbindungsbolzens 7 möglich. Bei der Montage der Zug-Druck-Stange kann die Einführrichtung des Verbindungsbolzens daher frei gewählt werden, was die Montagefreundlichkeit der Zug-Druck-Stange 1 erhöht.

### BEZUGSZEICHENLISTE

- 1: Zug-Druck-Stange
- 2: Befestigungsvorrichtung
- 3: Gabelkopf
- 4: Schaft
- 5: Mittelteil
- 6: Verbindungsbohrung
- 7: Verbindungsbolzen
- 8: Clipelement
- 9: Hebelarm
- 10: Betätigungsleiste
- 11: Haltebolzen
- 12: Einkerbung

## Patentansprüche

1. Zug-Druck-Stange (1), aufweisend:
- zumindest eine Befestigungsvorrichtung (2) mit einem Gabelkopf (3) und einem daran angeordneten Schaft (4), wobei die Befestigungsvorrichtung (2) zur Längenveränderung der Zug-Druck-Stange (1) über eine Gewindeanordnung drehbar mit einem rohrförmigen Mittelteil (5) verbunden ist,
- einen Verbindungsbolzen (7), der beidseitig in eine Verbindungsbohrung (6) des Gabelkopfes (3) einsetzbar ist, **dadurch gekennzeichnet, dass** der Verbindungsbolzen (7) ein Clipelement (8) aufweist, welches in eine am Gabelkopf (3) ausgebildete Halterung (11) einrastbar ist.

2. Zug-Druck-Stange (1) nach Anspruch 1, wobei an beiden äußeren Seitenflächen des Gabelkopfes (2) jeweils eine Halterung (11) ausgebildet ist.

3. Zug-Druck-Stange (1) nach einem der vorhergehenden Ansprüche, wobei die Halterung (11) als Haltebolzen (11) an der äußeren Seitenfläche des Gabelkopfes (3) ausgebildet ist.

4. Zug-Druck-Stange (1) nach Anspruch 3, wobei der Haltebolzen (11) eine radial umlaufende Einkerbung (12) aufweist.

5. Zug-Druck-Stange (1) nach einem der vorhergehenden Ansprüche, wobei der Verbindungsbolzen (7) einen Hebelarm (9) aufweist, an dem das Clipelement (8) ausgebildet ist.

6. Zug-Druck-Stange (1) nach einem der vorhergehenden Ansprüche, wobei der Verbindungsbolzen (7) eine Betätigungsleiste (10) aufweist.

7. Zug-Druck-Stange (1) nach einem der vorhergehenden Ansprüche, wobei das Clipelement (8) als Teilkreisring, insbesondere als Dreiviertel- oder Zweidrittelring, ausgebildet ist.

8. Zug-Druck-Stange (1) nach einem der vorhergehenden Ansprüche, wobei das Clipelement (8) aus einem Polymerwerkstoff, insbesondere aus einem thermoplastischen Polymerwerkstoff, besteht.

## Claims

1. Push-pull rod (1), having:
- at least one fixing device (2) with a fork head (3) and a shaft (4) arranged thereon, the fixing device (2) being rotatably connected to a tubular central part (5) via a thread arrangement in order to change the length of the push-pull rod (1),
- a connecting bolt (7), which can be inserted on both sides into a connecting bore (6) of the fork head (3),
**characterized in that**
the connecting bolt (7) has a clip element (8) which can be latched into a retainer (11) formed on the fork head (3).

2. Push-pull rod (1) according to Claim 1, wherein a retainer (11) is respectively formed on both outer side surfaces of the fork head (2).

3. Push-pull rod (1) according to one of the preceding claims, wherein the retainer (11) is formed as a retaining bolt (11) on the outer side surface of the fork head (3).

4. Push-pull rod (1) according to Claim 3, wherein the retaining bolt (11) has a radially circumferential indentation (12).

5. Push-pull rod (1) according to one of the preceding claims, wherein the connecting bolt (7) has a lever arm (9), on which the clip element (8) is formed.

6. Push-pull rod (1) according to one of the preceding claims, wherein the connecting bolt (7) has an actuating bar (10).

7. Push-pull rod (1) according to one of the preceding claims, wherein the clip element (8) is formed as a partially circular ring, in particular as a three-quarter or two-thirds ring.

8. Push-pull rod (1) according to one of the preceding claims, wherein the clip element (8) consists of a polymer material, in particular of a thermoplastic polymer material.

## Revendications

1. Pince de traction-compression (1), présentant :
- au moins un dispositif de fixation (2) avec une tête de fourche (3) et une tige (4) disposée sur celle-ci, le dispositif de fixation (2) étant relié à une partie centrale de forme tubulaire (5) pouvant tourner par rapport à un agencement fileté pour faire varier la longueur de la pince de traction-compression (1),
- un boulon de liaison (7) qui peut être inséré de chaque côté dans un alésage de liaison (6) de la tête de fourche (3),
**caractérisée en ce que**
le boulon de liaison (7) présente un élément d'enclipsage (8) qui peut être encliqueté dans une fixation (11) réalisée sur la tête de fourche (3).

2. Pince de traction-compression (1) selon la revendication 1, dans laquelle une fixation (11) est à chaque fois réalisée au niveau des deux surfaces latérales extérieures de la tête de fourche (2).

3. Pince de traction-compression (1) selon l'une quelconque des revendications précédentes, dans laquelle la fixation (11) est réalisée sous forme de boulon de fixation (11) au niveau de la surface latérale extérieure de la tête de fourche (3).

4. Pince de traction-compression (1) selon la revendication 3, dans laquelle le boulon de fixation (11) présente une encoche radialement périphérique (12).

5. Pince de traction-compression (1) selon l'une quelconque des revendications précédentes, dans laquelle le boulon de liaison (7) présente un bras de levier (9) au niveau duquel est réalisé l'élément d'enclipsage (8).

6. Pince de traction-compression (1) selon l'une quelconque des revendications précédentes, dans laquelle le boulon de liaison (7) présente une patte d'actionnement (10).

7. Pince de traction-compression (1) selon l'une quelconque des revendications précédentes, dans laquelle l'élément d'enclipsage (8) est réalisé sous forme de bague partiellement circulaire, en particulier sous forme de bague sur trois-quarts de cercle ou deux-tiers de cercle.

8. Pince de traction-compression (1) selon l'une quelconque des revendications précédentes, dans laquelle l'élément d'enclipsage (8) se compose d'un matériau polymère, en particulier d'un matériau polymère thermoplastique.
